(19)

Europäisches
Patentamt
European
Patent Office
Office européen
des brevets

(11) **EP 1 678 246 B1**

(12) **EUROPEAN PATENT SPECIFICATION**

(45) Date of publication and mention
of the grant of the patent:
**02.05.2007 Bulletin 2007/18**

(21) Application number: **04765921.4**

(22) Date of filing: **06.10.2004**

(51) Int Cl.:
***C08K 3/10*** *(2006.01)*          ***C08L 67/06*** *(2006.01)*
***C08L 63/10*** *(2006.01)*

(86) International application number:
**PCT/EP2004/011353**

(87) International publication number:
**WO 2005/047379 (26.05.2005 Gazette 2005/21)**

(54) **UNSATURATED POLYESTER RESIN OR VINYL ESTER RESIN COMPOSITIONS HAVING REDUCED GEL-TIME DRIFT TENDENCY**

UNGESÄTTIGTES POLYESTERHARZ ODER VINYLESTERHARZ ENTHALTENDE ZUSAMMENSETZUNGEN MIT VERRINGERTER GELZEITDRIFTNEIGUNG

COMPOSITIONS DE RESINE POLYESTER OU DE RESINE VINYLESTER INSATUREE DONT LE TEMPS DE GELIFICATION TEND MOINS A S'ALLONGER

(84) Designated Contracting States:
**AT BE BG CH CY CZ DE DK EE ES FI FR GB GR HU IE IT LI LU MC NL PL PT RO SE SI SK TR**

(30) Priority: **31.10.2003 EP 03078431**

(43) Date of publication of application:
**12.07.2006 Bulletin 2006/28**

(73) Proprietor: **DSM IP Assets B.V.**
**6411 TE Heerlen (NL)**

(72) Inventors:
• **JANSEN, Johan, Franz, Gradus, Antonius**
**NL-6165 AP Geleen (NL)**
• **KRAEGER, Ivo, Ronald**
**NL-3742 PJ Baarn (NL)**

(74) Representative: **Verhaegen, Ilse Maria M. et al**
**DSM Intellectual Property**
**P.O. Box 9**
**6160 MA Geleen (NL)**

(56) References cited:
**EP-A- 0 761 737          US-A- 3 297 789**
**US-A- 3 584 076          US-A- 4 329 263**
**US-A- 4 348 498          US-A1- 2003 083 443**

• **DATABASE WPI Section Ch, Derwent Publications Ltd., London, GB; Class A00, AN 1968-80481P XP002270482 & JP 42 005092 B (ASAG) 1968**

**Description**

The present invention relates to unsaturated polyester resin or vinyl ester resin compositions showing a reduced gel-time drift tendency. The present invention further also relates to objects and structural parts prepared from such unsaturated polyester or vinyl ester resins. As meant herein, objects and structural parts are considered to have a thickness of at least 0.5 mm and appropriate mechanical properties.

As meant herein the term gel-time drift (for a specifically selected period of time, for instance 30 or 60 days) reflects the phenomenon, that - when curing is performed at another point of time than at the reference standard moment for curing 24 hours after preparation of the resin - the gel time observed is different from that at the point of reference. For unsaturated polyester resins and vinyl ester resins, as can generally be cured under the influence of peroxides, gel time represents the time lapsed in the curing phase of the resin to increase in temperature from 25 °C to 35 °C. Normally this corresponds to the time the fluidity (or viscosity) of the resin is still in a range where the resin can be handled easily. In closed mould operations, for instance, this time period is very important to be known. The lower the gel-time drift is, the better predictable the behavior of the resin (and the resulting properties of the cured material) will be.

W. D. Cook *et al.* in Polym. Int. Vol.50, 2001, at pages 129-134 describe in an interesting article various aspects of control of gel time and exotherm behavior during cure of unsaturated polyester resins. They also demonstrate how the exotherm behavior during cure of such resins can be followed. Figures 2 and 3 of this article show the gel times in the bottom parts of the exotherms measured. Because these authors focus on the exotherms as a whole, they also introduced some correction of the exotherms for heat loss. As can be seen from the figures, however, such correction for heat loss is not relevant for gel times below 100 minutes.

Gel time drift (hereinafter: "Gtd") can be expressed in a formula as follows:

$$\text{Gtd} = (T_{\text{25-35°C at x-days}} - T_{\text{25-35°C at 1day}}) / T_{\text{25-35°C at 1day}} \times 100\% \qquad \text{(formula 1)}$$

In this formula $T_{25 \to 35°C}$ (which also might be represented by $T_{gel}$) represents, as mentioned above, the time lapsed in the curing phase of the resin to increase in temperature from 25 °C to 35 °C. The additional reference to "at x days" shows after how many days of preparing the resin the curing is effected.

All polyester resins, by their nature, undergo some changes over time from their production till their actual curing. One of the characteristics where such changes become visible is the gel-time drift. The state of the art unsaturated polyester or vinyl ester resin systems generally are being cured under the influence of peroxides and are pre-accelerated by the presence of metal compounds, especially cobalt salts, tertiary amines and mercaptans. Cobalt naphthenate and cobalt octanoate are the most widely use accelerators. See for instance EP-0761737-A1, JP-42005092 B, US-A-4,329,263, US-A-3,584,076, US-A-3,297,789. An excellent review article of M. Malik *et al.* in J.M.S. - Rev. Macromol. Chem. Phys., C40(2&3), p.139-165 (2000) gives a good overview of the current status of these resin systems. Curing is addressed in chapter 9.

The phenomenon of gel-time drift, however, so far got quite little attention in the literature. Most attention has been given to aspects of acceleration of gel time in general, and to improving of pot-life or shelf life of resins. The latter aspects, however, are not necessarily correlated to aspects of gel-time drift, and so, the literature until now gives very little suggestions as to possible solutions for improvement of (i.e. lowering of) gel-time drift. For instance, reference can be made to a paper presented by M. Belford et al., at the Fire Retardant Chemicals Association Spring Conference, March 10-13, 2002 where the gel-time reducing effect of a new antimony pentoxide dispersion (NYACOL APE 3040) has been addressed in fire retardant polyester resins promoted with cobalt.

Accordingly, for the unsaturated polyester resins and vinyl ester resins as are part of the current state of the art there is still need for finding resin systems showing reduced gel-time drift, or in other words, resin systems having only slight gel-time drift. Moreover, for environmental reasons, the presence of cobalt in the resins is less preferred.

The present inventors now surprisingly found that unsaturated polyester resin or vinyl ester resin compositions showing a reduced gel-time drift tendency could be obtained by providing unsaturated polyester resins or vinyl ester resins containing:

   a) a titanium compound, other than titanium dioxide, in an amount of at least 0.05 mmol per kg of primary resin system;
   b) a ligand capable of coordinating with the titanium of the titanium compound, in

an amount of the ligand of at least 0.25 mmol per kg of primary resin system, with the ligand and the titanium being used in a molar ratio of 5 or higher.

As meant herein, the amount of ligand is calculated as being the sum of the ligand possibly already present in the titanium compound, and the ligand added separately to the resin composition.

The unsaturated polyester resin or vinyl ester resin may be any such resin as is known to the skilled man. Examples thereof can be found in the aforementioned review article by M. Malik *et al.,* who describe a classification of such resins - on the basis of their structure - in five groups: (1) ortho resins; (2) iso-resins; (3) bisphenol-A-fumarates; (4) chlorendics, and (5) vinyl ester resins. Besides these classes of resins also so-called dicyclopentadiene (DCPD) resins can be distinguished. More detailed examples thereof will be given below in some of the following paragraphs, as well as in the experimental part.

For understanding of the invention, and for proper assessment of the amounts of titanium compound and ligand to be present in the resin, the term "primary resin system" as used herein is understood to mean the total weight of the resin, but excluding any fillers as may be used when applying the resin system for its intended uses. The primary resin system therefore consists of the unsaturated polyester resin or vinyl ester resin, any additives present therein (except for the peroxide component that is to be added shortly before the curing) for making it suitable for being cured, for instance all kinds of compounds soluble in the resin, such as initiators, accelerators, inhibitors, low-profile agents, colorants (dyes), thixotropic agents, release agents etc., as well as styrene and/or other solvents as may usually be present therein. The amount of additives soluble in the resin usually may be as from 1 to 25 wt.% of the primary resin system; the amount of styrene and/or other solvent may be as large as up to 50 wt.% of the primary resin system. The primary resin system, however, explicitly does not include compounds not being soluble therein, such as fillers (e.g. glass or carbon fibers), talc, clay, solid pigments (such as, for instance, titanium dioxide (titanium white)), flame retardants, e.g. aluminium oxide hydrates, etc.

According to the invention the unsaturated polyester resins or vinyl ester resins containing a titanium compound, other than titanium dioxide in a certain amount (at least 0.05 mmol per kg of primary resin system) and a ligand capable of coordinating with the titanium of the titanium compound, in an amount of at least 0.25 mmol per kg of primary resin system, with the ligand and the titanium compound being used in a molar ratio of 5 or higher. Such amount of ligand (calculated while taking into account any amount of ligand already present in the titanium compound itself) is sufficient (i.e. effective) to achieve the intended reduced gel-time drift. As meant herein the term "effective" indicates that the effect of gel-time drift reduction caused by the amount of titanium compound is well beyond marginal, i.e. not close to the limits of detectability of such effect. Further details about these aspects will be given below.

It is to be noticed that during the production processes for the preparation of unsaturated polyester resins or vinyl ester resins often catalysts, for instance titanium-containing catalysts may be used. The concentration of such catalysts in the primary resin system, especially for the titanium present therein as is used as a catalyst, however, is always much lower (namely at most about 10 ppm) than the at least 0.05 mmol per kg as is required for the titanium component according to the present invention. In the resin compositions according to the current state of art never effects of titanium concentration on gel time drift have been observed.

Accordingly, the present invention is unobvious over the prior art: good results in gel-time drift reduction are being achieved, as will be demonstrated in the experimental part. Moreover, the resin systems according to the present invention show good curing behavior. The unobviousness of the present invention can be demonstrated, as will be done in the experimental part, for a number of reasons. On the one hand, adding of a peroxide to a resin (prepared while using a titanium catalyst) without the presence of, for instance, a cobalt salt as accelerator does not lead to curing. Moreover, if only a titanium compound, but no ligand is present in the resin system, then also no favorable effect in gel-time reduction is observed and curing is poor or impossible. Likewise, if no titanium compound, but solely the ligand is present, then also favorable effect on gel-time reduction is not found, nor is any curing observed. Only the unobvious combined presence of a titanium compound and a ligand, in effective amounts, leads to the results according to the present invention.

Examples of suitable unsaturated polyester or vinyl ester resins to be used as primary resin systems in the resins of the present invention are, subdivided in the categories as classified by Malik et al., cited above.

(1) Ortho-resins: these are based on phthalic anhydride, maleic anhydride, or fumaric acid and glycols, such as 1,2-propylene glycol, ethylene glycol, diethylene glycol, triethylene glycol, neopenytyl glycol or hydrogenated bisphenol-A. Commonly the ones derived from 1,2-propylene glycol are used in combination with a reactive diluent such as styrene.

(2) Iso-resins: these are prepared from isophtalic acid, maleic anhydride or fumaric acid, and glycols. These resins may contain higher proportions of reactive diluent than the ortho resins.

(3) Bisphenol-A-fumarates: these are based on ethoxylated bisphenol-A and fumaric acid.

(4) Chlorendics: are resins prepared from chlorine/bromine containing anhydrides or phenols in the preparation of the UP resins.

(5) Vinyl ester resins: these are resins, which are mostly used because of their because of their hydrolytic resistance and excellent mechanical properties , as well as for their low styrene emission, are having unsaturated sites only in the terminal position, introduced by reaction of epoxy resins (e.g. diglycidyl ether of bisphenol-A, epoxies of the phenol-novolac type, or epoxies based on tetrabromobisphenol-A) with (meth)acrylic acid. Instead of (meth)acrylic acid also (meth)acrylamide may be used.

All of these resins, as can suitably used in the context of the present invention, may be modified according to methods known to the skilled man, e.g. for achieving lower acid number, hydroxyl number or anhydride number, or for becoming more flexible due to insertion of flexible units in the backbone, etc. The class of DCPD-resins is obtained either by modification of any of the above resin types by Diels-Alder reaction with cyclopentadiene, or they are obtained alternatively by first reacting maleic acid with dicyclopentadiene, followed by the resin manufacture as shown above.

Of course, also other reactive groups curable by reaction with peroxides may be present in the resins, for instance reactive groups derived from itaconic acid, citraconic acid and allylic groups, etc.

The ratio of the molar amounts of ligand and titanium should be at least 5. Generally, said molar ratio can vary between wide ranges. Preferably it will be chosen in the range of from 10 to 500, more preferably of from 20 to 200. The skilled man will easily be able to find the most appropriate molar ratio of ligand and titanium as is leading to the desired effect on gel-time reduction.

According to the invention, the titanium compound is preferably present in an amount of from 0.15-100, more preferably of from 1-50, and most preferably of from 10-40 mmol per kg of primary resin system. If the content of the titanium compound is lower than that of the lower limit as is indicated in claim 1, then the effect on the gel-time drift reduction is too small. If, on the other hand, the amount of the titanium compound, in combination with a (too) high amount of ligand, is too high, than the combination of titanium compound and ligand starts to act as a softening agent and curing properties of the resin will be poor, even though curing might become very fast. The skilled man will easily be capable of finding suitable ranges of the required content of titanium compound and ligand.

In the context of the invention all kinds of titanium compounds can be used, with the proviso that the titanium compound is not titanium dioxide. The latter compound is considered to be inert. Moreover, titanium dioxide is often used in resins for as a white pigment. According to the invention, the titanium compound present in the resin is preferably an organotitanium compound. It will be clear that, instead of a single titanium compound also a mixture of titanium compounds can be used.

It is to be noticed here, that Kolczynski et al. in Section 16-A, pages 1-8 of the proceedings of the 24th Annual Technical Conference (1969) of the Reinforced Plastics/Composites Division of the Society of the Plastics Industry, Inc. described the use of titanium acetylacetonate (0.08 wt.%) for activating the curing of resins with peroxides. The titanium acetylacetonate as used by Kolczynski is $Ti^{IV}$ acetylacetonate, a compound comprising exactly 4 molar equivalents of ligand per mole of titanium. The authors concluded that titanium did not produce any significant activation (when compared with a range of other metals), whereas cobalt, vanadium, copper and iron were shown to have significant effects on curing. It is noticed that there is no indication at all in this reference as to effects on gel-time drift reduction, nor of the favorable effects thereon of using a combination of a titanium compound and a suitable ligand in molar ratios as are defined for the present invention. US-A-4,348,498 also shows (table 2, column 5) that titanium acetyl acetonate does not produce any significant activation.

Examples of suitable titanium compounds and ligands to be present in the resins according to the present invention will be given below. The titanium compound, other than titanium dioxide, should be present in the resin in an amount of at least 0.05 mmol per kg of primary resin system. The upper limit of the titanium content is not very critical, although for reasons of cost efficiency of course no extremely high concentrations will be applied. Generally the concentration of the titanium compound in the primary resin will be lower than 50 mmol per kg of primary resin system. Also the concentration of the ligand is not very critical, provided the ligand is present in an effective amount. The skilled man can easily find which amounts are suitable.

It will be clear that in the context of the present invention, the titanium compound may be a single titanium compound, or a mixture of titanium compounds (i.e. excluding the presence of titanium dioxide; if titanium dioxide is present, then - for the purposes of the present invention, it is not considered to be part of the titanium compound, but is considered to be a pigment). Similarly, the ligand may be one single ligand compound capable of coordination with titanium, or a mixture of such ligand compounds.

The valence of the titanium in the titanium compound as is used in the context of the present invention preferably will be such that the titanium in the resin system will be capable of undergoing transition from $Ti^{IV}$ to $Ti^{III}$, and *vice versa.* Most preferably, the titanium in the titanium compound has the valence state of $Ti^{IV}$ when the titanium compound is being added to the primary resin.

Generally, the titanium compounds used most suitably will be organotitanium compounds. The titanium compounds, however, also can be formed *in situ* in the primary resin, for instance from reaction of an inorganic titanium salt (e.g. $TiCl_4$) with an organic compound while forming HCl. The skilled man will easily be able to find suitable titanium compounds to be used, taking into account considerations as to required solubility in the primary resin, resistance against hydrolysis, etc.

Resins with excellently low gel-time drift are being obtained if the titanium compound is a titanium alkoxide, in particular if the titanium compound is a titanium propoxide, titanium butoxide, or a titanium carboxylate. The resins according to the invention further contain a ligand, in effective amounts, as explained above, capable of coordinating with the titanium atoms. The skilled man will easily be able to find suitable titanium compounds to be used, taking into account considerations as to required solubility in the primary resin, resistance against hydrolysis, etc.

According to the invention, the ligand should be present in an amount of at least 0.25 mmol per kg of primary resin system. Such amount will, depending of the type of ligand used, generally - when defined as a weight percentage - be in the range of from 0.1-10 wt.% per kg of primary resin system, preferably of from 0.2-5 wt.%, and most preferably of from 0.5-3 wt.%. Accordingly, it is particularly advantageous if the ligand is present in an amount of from 0.3-500 mmol per kg of primary resin system, more preferably of from 1-200 mmol, and most preferably of from 3-150 mmol per kg of primary resin.

Most suitably in the context of the present invention the ligand is a bidentate ligand (i.e. a ligand wherein each molecule of the ligand contains more than one coordinating groups and is capable to form two separate ligand bonds to the titanium atom that is the central atom in the titanium/ligand complex so formed). Examples of suitable ligands can be chosen form the following, not limitative, list of ligands as are known to be used in other fields of chemistry, for instance in metallocene chemistry, chiral chemistry (e.g. chiral epoxidation reactions), etc. Examples of such ligands are: diphosphine compounds; diamine compounds, including bipyridyl compounds; disulphone compounds; dicarboxylic acid or ester compounds (such as , for instance, oxalic acid, oxalates, salicylic acid, salicylates, diethylmalonate, and tartaric acid); diketone compounds (such as , for instance, acetylacetone); keto acid compounds (such as , for instance, acetylacetate); hydroxy acids (such as , for instance, pyruvic acid, tartaric acid, ascorbic acid); thiol carboxylic acids; hydroxy dithiocarboxylic acids; ketoamide compounds (such as , for instance, acetoacetamide), etc., or even also compounds with higher functionality, e.g. ethylenediamine tetraacetic acid (EDTA), nitrilo tri-acetic acid (NTA), polyols and the like. The ligands used even may be of polymeric types (for instance, polymeric alkyl tartrates), or built in in the primary resin backbone (as, for instance, might be the case for malonates and (meth)acrylates). In all such cases for the calculation of the molar ratio of ligand to titanium the ligand molecules will be calculated as moles of their building blocks.

In particular it is preferred that at least one of the coordinating groups of the ligand is an oxygen containing group. Examples of such very suitable ligands are mentioned in the foregoing list.

It is even more preferred that both of the coordinating groups of the ligand are oxygen containing groups. Examples of such most suitable ligands that can be used in the present invention are mentioned in the above list, and can easily be selected therefrom by the skilled man.

Preferably the ligand is selected from the group of acetylacetone, acetoacetates, acetoacetamides, ascorbic acid, pyruvic acid, tartaric acid derivatives, and dialkylmalonates.

In specifically preferred embodiments of the invention the resin is substantially free of cobalt. It is to be noticed, however, that the favorable results as to reduced gel-time drift - as is being shown in the experimental part - also are being achieved in case the resin already contains an amount of cobalt effective for achieving some lowering of the gel time drift. The additional presence of a titanium compound and a ligand, in the amounts as claimed according to the present invention, gives a further improvement in reducing the gel time drift.

The unsaturated polyester resins and vinyl ester resins as are being used in the context of the present invention may be any type of such resins, but preferably are chosen from the group of DCPD-resins, iso-phthalic resins, ortho-phtalic resins and vinyl ester resins. More detailed examples of resins belonging to such groups of resins have been shown in the foregoing part of the specification.

These resins all can be cured by means of radical curing. Preferably such curing is being initiated with a peroxide. Of course, in addition to the peroxide accelerators can be applied. All peroxides known to the skilled man for being used in curing of unsaturated polyester resins and vinyl ester resins can be used. Such peroxides include organic and inorganic peroxides, whether solid or liquid; also hydrogen peroxide may be applied. Examples of suitable peroxides are, for instance, peroxy carbonates (of the formula -OC(O)O-), peroxyesters (of the formula -C(O)OO-), diacylperoxides (of the formula -C(O)OOC(O)-), dialkylperoxides (of the formula -OO-), etc. They can also be oligomeric or polymeric in nature. An extensive series of examples of suitable peroxides can be found, for instance, in US 2002/0091214-A1, paragraph [0018]. The skilled man can easily obtain information about the peroxides and the precautions to be taken in handling the peroxides in the instructions as given by the peroxide producers.

Preferably, the peroxide is chosen from the group of organic peroxides. Examples of suitable organic peroxides are: tertiary alkyl hydroperoxides (such as, for instance, t-butyl hydroperoxide), and other hydroperoxides (such as, for instance, cumene hydroperoxide), peroxyesters or peracids (such as, for instance, t-butyl peresters, benzoyl peroxide, peracetates and perbenzoates, lauryl peroxide, including (di)peroxyesters), perethers (such as, for instance, peroxy diethyl ether), perketones (such as, for instance, methyl ethyl ketone peroxide). Often the organic peroxides used as curing agent are tertiary peresters or tertiary hydroperoxides, i.e. peroxy compounds having tertiary carbon atoms directly united to a -O-O-acyl or -OOH group. Clearly also mixtures of these peroxides with other peroxides may be used in the context of the present invention. The peroxides may also be mixed peroxides, i.e. peroxides containing any two of different peroxygen-bearing moieties in one molecule).

Most preferably the peroxide is a liquid peroxide. Handling of liquid peroxides when curing the resins for their final use is generally more easy: they have better mixing properties and dissolve more quickly in the resin to be cured.

In particular it is preferred that the peroxide is selected from the group of perethers and perketones. The peroxide being most preferred in terms of handling properties and economics is methyl ethyl ketone peroxide (MEK peroxide).

As mentioned before, the resins according to the invention also may contain an inhibitor. Inhibitors are compounds that prevent initiation of the curing reactions in the resin during storage of the resin. Especially the inhibitors increase the pot-life (i.e. shelf-life) of the resin. It is to be noticed, however, and the skilled man is certainly aware of that, that improving the pot-life of a resin is not the same as improving the gel-time drift properties of the resin. In fact these are totally different aspects of the resin. In the context of the invention, inhibitors that are most preferred to be used, are preferably chosen from the group of phenolic inhibitors, for instance t-butylcatechol; N-oxyl free radical inhibitors, for instance hydroxytempo (i.e. 2,2,6,6-tertramethyl-4-hydroxy-piperidine-N-oxyl, proxyl (i.e. 3-carboxy-2,2,5,5-tetramethyl-1-pyrrolidinyl-oxy), etc.; or phenothiazine. The skilled man can easily find suitable inhibitors and/or combinations thereof for being used in the context of the present invention.

In addition to the titanium compound in the resins according to the invention, also compounds derived from other metals, and not being metal oxides, may be present in the resin. Such other organometal compounds, in particular such compounds containing copper, nickel, iron, vanadium or manganese, are known to have been proposed as replacer for the cobalt compounds, and thereby can be used to lower the (environmentally undesirable) cobalt content of the resins. The fact that such other metals (from Periodic System of Elements groups other than the group comprising titanium) have been proposed as replacers of cobalt for gel-time drift reduction of resins, however, cannot make the present invention obvious. There is no hint at all, that titanium compounds, in combination with a suitable ligand, as are being the subject of the present invention, would be excellently suitable for reducing the gel time drift of unsaturated polyester resins and vinyl ester resins.

For the avoidance of any doubt, it is to be made clear that the resins according to the invention also comprise resins containing a cobalt compound as an accelerator for the peroxide. As is being shown in the experimental part of the application, the effect of the presence of a titanium compound and a ligand (in their effective amounts, as discussed above) on the reduction of the gel-time drift is significant and supportive of the present invention.

As has been mentioned above, the unsaturated polyester resins used in the present invention may contain solvents. The solvents may be inert to the resin system or may be reactive therewith during the curing step. Reactive solvents are particularly preferred. Examples of suitable reactive solvents are styrene, (meth) acrylates, N-vinylpyrrolidone and N-vinylcaprolactam. Preferably the unsaturated polyester resins contain at least 5 wt.% of a reactive solvent.

The unsaturated polyester resins and vinyl ester resins according to the present invention can be applied in all applications as are usual for such types of resins. In particular they can suitably used in closed mould applications, but they also can be applied in open mould applications. For closed mould applications it is especially important that the manufacturer of the closed mould products reliably can use the favorable (i.e. reduced) gel-time drift tendency of the resins according to the invention. End segments where the unsaturated polyester resins and vinyl ester resins according to the present invention can be applied are also marine applications, chemical anchoring, roofing, construction, relining, pipes & tanks, flooring, windmill blades, etc. That is to say, the resins according to the invention can be used in all known uses of unsaturated polyester resins and vinyl ester resins.

The present invention further also relates to all such objects or structural parts as are being obtained when curing the unsaturated polyester or vinyl ester resin compositions according to the invention. These objects and structural parts have excellent mechanical properties.

The invention is now demonstrated by means of a series of examples and comparative examples. All examples are supportive of the scope of claims. The invention, however, is not restricted to the specific embodiments as shown in the examples.

Experimental part

Gel time ($Tgel_{25-35°C}$) and peak time ($Tpeak_{25-peak}$) were determined by exotherm measurements according to the method of DIN 16945 when curing the resin with the peroxides as indicated in the examples and comparative examples. The equipment used therefor was a Soform gel timer, with a Peakpro software package and National Instruments hardware; the waterbath and thermostat used were respectively Haake W26, and Haake DL30.

The gel-time drift (Gtd) was calculated on the basis of the gel times determined at differrnt dates of curing according to formula 1:

$$\text{Drift} = (T_{25\text{-}35°C \text{ at x-days}} - T_{25\text{-}35°C \text{ at 1day}})/ T_{25\text{-}35°C \text{ at 1day}} \times 100\% \qquad \text{(formula 1)}$$

Most of the resins used for curing are commercially available products, as indicated in the Examples and Comparative Examples. In addition thereto, also a resin - hereinafter called Resin A - was specifically prepared on behalf of the inventors for being used in the tests. Resin A was made as follows:

184.8 g of propylene glycol (PG), 135.8 g of diethylene glycol (DEG), 216.1 g of phthalic anhydride (PAN), 172.8 g of maleic anhydride (MAN), and standard inhibitors were charged in a vessel equipped with a reflux condensor, a temperature measuring device and inert gas inlet. The mixture was heated slowly by usual methods to 205 °C. At 205 °C the mixture was kept under reduced pressure until the acid value reached a value below 16 mg KOH/g resin and the falling ball viscosity at 100 °C was below 50 dPa.s. Then the vacuum was relieved with inert gas, and the mixture was cooled down to 130 °C, whereafter the solid UP resin so obtained was transferred to a mixture of 355 g of styrene and 0.07 g of methyl-t-butyl-hydroquinone and was dissolved at a temperature below 80 °C. The final resin viscosity reached at 23 °C was 640 mPa.s, and the Non Volatile Matter content was 64.5 wt.%.

In the examples and comparative examples amounts of the components in mmol are indicated between brackets as "mmol" (however said values are at each occurrence to be read as meaning mmol per kg of primary resin).

Example 1

To 100 g of an unsaturated polyester resin in styrene (Palatal P69-02, DSM Composite Resins AG , Switzerland) was added 0.10 g (3.5 mmol) of titanium (IV) n-propoxide, and 1 g (100 mmol) of acetylacetone. After stirring for 1 minute the resin was cured with 3% Butanox M-50 (Akzo, the Netherlands), resulting in a solidified material. The following characteristics were obtained with the gel timer:

$Tgel_{25-35°C}$ = 16.5 min;
$Tpeak_{25-peak}$ = 48 min;
peak temp = 70 °C.

Example 2

Example 2 was performed in the same way as example 1, except that 0.14 g (4.1 mmol) of titanium (IV) n-butoxide was employed. The following characteristics were obtained with the gel timer:

$Tgel_{25-35°C}$ = 18.1 min;
$Tpeak_{25-peak}$ = 53 min;
peak temp = 68 °C

Comparative example A

To 100 g of an unsaturated polyester resin in styrene (Palatal P69-02, DSM Composite Resins) was added 0.10 g (3.5 mmol) of titanium (IV) n-propoxide. After stirring for 1 minute 3 g of Butanox M-50 (Akzo) was added. After 24 hours the resin still no curing had occurred.

Comparative example B

To 100 g of an unsaturated polyester resin in styrene (Palatal P69-02, DSM Composite Resins) was added 1 g (100 mmol) of acetylacetone. After stirring for 1 min 3 g of Butanox M-50 (Akzo) was added. After 24 hours still no curing of the resin had occurred..

Examples 1 and 2, combined with comparative examples A and B, show (also in combination with Examples 7-12 hereinafter) that both a titanium compound as well as a suitable ligand is required for curing.

Example 3: Curing of a DCPD type resin

To 100 g of Synolite 0175-N-1 (DSM Composite Resins, Switzerland) was added 2 g of acetylacetone (200 mmol) and 0.8 g of titanium (IV) n-propoxide (28 mmol). After stirring for 1 min the resin was cured with 3 g Butanox M-50 (Akzo), resulting in a solidified material. The following characteristics were obtained with the gel timer:

$Tgel_{25-35°C}$ = 10.3 min;
$Tpeak_{25-peak}$ = 26.6 min;
peak temp = 141 °C.

Example 4: Curing of an ortho type resin

To 100 g of Resin A was added 2 g (200 mmol) of acetylacetone and 0.8 g (28 mmol) of titanium (IV) n-propoxide. After stirring for 1 min the resin was cured with 3 g of Butanox M-50 (Akzo), resulting in a solidified material. The following characteristics were obtained with the gel timer:

$Tgel_{25-35°C}$ = 7.9 min;
$Tpeak_{25-peak}$ = 15.6 min;
peak temp = 152°C.

Example 5: Curing of an Iso type resin

To 100 g of Synolite 1717-N-1 (DSM Composite Resins) was added 2 g (200 mmol) of acetylacetone and 0.8 g (28 mmol) of titanium (IV) n-propoxide. After stirring for 1 min the resin was cured with 3 g of Butanox M-50 (Akzo), resulting in a solidified material. The following characteristics were obtained with the gel timer:

$Tgel_{25-35°C}$ = 5.5 min;
$Tpeak_{25-peak}$ = 13.6 min;
peak temp = 163 °C.

Example 6: Curing of a vinyl ester type resin

To 100 g of Daron XP-45-A-2 (DSM Composite Resins) was added 2 g (200 mmol) of acetylacetone and 0.8 g (28 mmol) of titanium (IV) n-propoxide. After stirring for 1 min the resin was cured with 3 g of Butanox M-50 (Akzo), resulting in a solidified material. The following characteristics were obtained with the gel timer:

$Tgel_{25-35°C}$ = 8.4 min;
$Tpeak_{25-peak}$ = 15.9 min;
peak temp = 159°C.

Examples 1-6 show that all kinds of unsaturated polyesters can be cured according to the invention.

Example 7

To 100 g of Resin A was added 2 g (200 mmol) of acetylacetone and 0.8 g (28 mmol) of titanium (IV) n-propoxide. After stirring for 1 min 3 g of Butanox M-50 (Akzo) was added and the resin was left overnight to cure. Visually it was determined that the resin was cured as a solidified material was obtained.

Example 8

To 100 g of Resin A was added 2 g (150 mmol) of ethyl acetoacetate and 0.8 g (28 mmol) of titanium (IV) n-propoxide. After stirring for 1 min 3 g of Butanox M-50 (Akzo) was added and the resin was left overnight to cure. Visually it was determined that the resin was cured as a solidified material was obtained.

Example 9

To 100 g of Resin A was added 2 g (110 mmol) of ascorbic acid and 0.8 g (28 mmol) of titanium (IV) n-propoxide. After stirring for 1 min 3 g of Butanox M-50 (Akzo) was added and the resin was left overnight to cure. Visually it was determined that the resin was cured as a solidified material was obtained.

Example 10

To 100 g of Resin A was added 2 g (230 mmol) of pyruvic acid and 0.8 g (28 mmol) of titanium (IV) n-propoxide. After stirring for 1 min 3 g of Butanox M-50 (Akzo) was added and the resin was left overnight to cure. Visually it was determined that the resin was cured as a solidified material was obtained.

Example 11

To 100 g of Resin A was added 2 g (120 mmol) of diethylmalonate and 0.8 g (28 mmol) of titanium (IV) n-propoxide. After stirring for 1 min 3 g of Butanox M-50 (Akzo) was added and the resin was left overnight to cure. Visually it was determined that the resin was cured as a solidified material was obtained.

Example 12

To 100 g of Resin A was added 2 g (130 mmol) of N,N-diethylacetoacetamide and 0.8 g (28 mmol) of titanium (IV) n-propoxide. After stirring for 1 min 3 g of Butanox M-50 (Akzo) was added and the resin was left overnight to cure. Visually it was determined that the resin was cured as a solidified material was obtained.
Examples 7-12 demonstrate that various bidentate ligands can be used according to the invention.

Example 13

To a resin comprising 90 g of Palatal P4 (DSM Composite Resins) and 10 g styrene was added 2 g (200 mmol) of acetylacetone and 0.8 g (28 mmol) of titanium (IV) n-propoxide. After stirring for 1 min 3 g of Butanox M-50 (Akzo) was added and the resin was left overnight to cure. Visually it was determined that the resin was cured as a solidified material was obtained.

Example 14

To a resin comprising 90 g of Palatal P4 (DSM Composite Resins) and 10 g of styrene was added 2 g (200 mmol) of acetylacetone and 0.8 g (28 mmol) of titanium (IV) n-propoxide. After stirring for 1 min 3 g of Trigonox 44-B (Akzo) was added and the resin was left overnight to cure. Visually it was determined that the resin was cured as a solidified material was obtained.

Example 15

To a resin comprising 90 g of Palatal P4 (DSM Composite Resins) and 10 g of styrene was added 2 g (200 mmol) of acetylacetone and 0.8 g (28 mmol) of titanium (IV) n-propoxide. After stirring for 1 min 3 g of Cyclonox LR (Akzo) was added and the resin was left overnight to cure. Visually it was determined that the resin was cured as a solidified material was obtained.
Examples 13-15 show that various types of peroxide can be used for curing a resin formulation according to the invention

Example 16

To 1000g of Resin A was added 10 g (100 mmol) of acetylacetone and 3 g (11 mmol) of titanium tetra n-propoxide. After stirring for 10 minutes the resin was stored overnight. To 100 g of this resin mixture then 3 g of Butanox M-50 (Akzo) was added, resulting in the following cure characteristics:

Tgel $_{25-35°C}$ = 6.6 min;
Tpeak $_{25-peak}$ = 21.3 min;
peak temp = 151 °C.

After 55 days of storage at room temperature the curing of 100 g of the original resin mixture was repeated.

Tgel $_{25-35°C}$ = 6.6 min;
Tpeak $_{25-peak}$ = 21.4 min;
peak temp 156 °C.

The gel time drift of the resin over said period of 55 days was 0%

Comparative example C

To 1000g of Resin A was added 3 g (5 mmol) of a cobalt octanoate solution in white spirit (10% wt. Co). White spirit is a mixture of aliphatic compounds. After stirring for 10 minutes the resin obtained was stored overnight. To 100 g of this resin mixture then 3 g of Butanox M-50 (Akzo) was added, resulting in the following cure characteristics:

$Tgel_{25-35°C}$ = 7.2 min;
$Tpeak_{25-peak}$ = 21.4 min;
peak temp = 146 °C.

After 55 days of storage at room temperature the curing of 100 g of the original resin mixture was repeated:

$Tgel_{25-35°C}$ = 7.8 min;
$Tpeak_{25-peak}$ = 16.8 min;
peak temp = 154 °C.

The gel time drift of the resin over said period of 55 days was 8%.

Example 16 and comparative example C demonstrate that curing according to the invention results in lower gel time drift.

Example 17

To 900 g of Palatal P5 (DSM Composite Resins) was added 100 g of styrene, 2 g (3 mmol) of cobalt octanoate in white spirit (10% wt. Co), 0.4 g of 4,6-di-t-butylcatechol, 2.3 g (23 mmol) of acetylacetone and 1.2 g (4.2 mmol) of titanium (IV) n-propoxide. After stirring for 10 minutes the resin was stored overnight. To 100 g of this resin mixture 3 g of Butanox M-50 (Akzo) was added, resulting in the following cure characteristics:

$Tgel_{25-35°C}$ = 38.7 min;
$Tpeak_{25-peak}$ = 52.5 min;
peak temp = 154 °C.

After 133 days of storage at room temperature the curing of 100 g of the original resin mixture was repeated:

$Tgel_{25-35°C}$ = 44.1 min;
$Tpeak_{25-peak}$ = 57.4 min;
peak temp = 155 °C.

The gel time drift of the resin over said period of 133 days was 14%

Comparative example D

To 900 g of Palatal P5 (DSM Composite Resins) was added 100g of styrene, 2 g (3 mmol) of cobalt octanoate in white spirit (10% wt. Co) and 0.4 g of 4,6-di-t-butyl-catechol. After stirring for 10 minutes the resin was stored overnight. To 100 g of this resin mixture 3 g of Butanox M-50 (Akzo) was added, resulting in the following cure characteristics:

$Tgel_{25-35°C}$ = 22.5 min;
$Tpeak_{25-peak}$ = 33.3 min;
peak temp = 158 °C.

After 133 days of storage at room temperature the curing was repeated.

$Tgel_{25-35°C}$ = 77.7 min;
$Tpeak_{25-peak}$ = 92.4 min;
peak temp = 147 °C.

The gel time drift of this resin was 245% over said period of 133 days.

Example 17 and comparative example D demonstrate that the cure system according to the invention can be used to reduce the gel time drift to a very large extent.

Example 18

To 900 g of Resin A was added 100 g of styrene and 20 g (200 mmol) of acetylacetone. After stirring for 10 minutes the resin was divided into 100 g portions, to which titanium (IV) n-propoxide - in varying amounts, presented both in g/kg and in mmol/kg, as shown in the following table - was added as well as 2 g of Butanox M50 (Akzo). The results with respect to curing or non-curing are shown in the table below. In this case the cure was determined visually based on the observation that a solidified material had formed (or not):

| Ti (g/kg resin) | 0.0028g | 0.0085g | 0.028g | 0.085g | 0.284 | 0.8529 | 2.84 | 8.5 |
|---|---|---|---|---|---|---|---|---|
| [Ti] mmol/kg resin | 0.01 | 0.03 | 0.1 | 0.3 | 1 | 3 | 10 | 30 |
| cure | uncured | uncured | cured | cured | cured | cured | cured | cured |

## Claims

1. Unsaturated polyester resin or vinyl ester resin composition showing a reduced gel-time drift tendency, **characterized in that** the unsaturated polyester resin or vinyl ester resin contains:

   a. a titanium compound, other than titanium dioxide, in an amount of at least 0.05 mmol per kg of primary resin system;
   b. a ligand capable of coordinating with the titanium of the titanium compound, in an amount of the ligand of at least 0.25 mmol per kg of primary resin system,

   with the ligand and the titanium being used in a molar ratio of 5 or higher.

2. Resin composition according to claim 1, **characterized in that** the molar ratio ligand and titanium is in the range of from 10 to 500, preferably in the range of from 20 to 200.

3. Unsaturated polyester resin or vinyl ester resin according to claim 1 or 2, **characterized in that** the titanium compound is present in an amount of from 0.15-100, preferably of from 1-50, and most preferably of from 10-40 mmol per kg of primary resin system.

4. Resin according to any of claims 1 to 3, **characterized in that** the titanium compound present is an organotitanium compound, or a mixture thereof.

5. Resin according to claim 4, **characterized in that** the titanium compound is a titanium alkoxide, preferably being a titanium propoxide or butoxide, or a titanium carboxylate.

6. Resin according to any of claims 1-5, **characterized in that** the ligand is present in an amount of from 0.3-500 mmol per kg of primary resin system, more preferably of from 1-200 mmol, and most preferably of from 3-150 mmol per kg of primary resin.

7. Resin according to claim 6, **characterized in that** the ligand is a bidentate ligand.

8. Resin according to claim 7, **characterized in that** at least one of the coordinating groups of the ligand is an oxygen containing group.

9. Resin according to claim 8, **characterized in that** both of the coordinating groups of the ligand are oxygen containing groups.

10. Resin according to any of claims 1-9, **characterized in that** the ligand is selected from the group of acetylacetone, acetoacetates, acetoacetamides, ascorbic acid, pyruvic acid, tartaric acid derivatives, and dialkylmalonates.

11. Resin according to any of claims 1-10, **characterized in that** the resin is substantially free of cobalt.

12. Resin according to any of claims 1-11, **characterized in that** the resin is a DCPD-resin, an iso-phtalic resin, an ortho-phtalic resin, or a vinyl ester resin.

13. Resin according to any of claims 1-12, **characterized in that** the resin can be cured with a peroxide.

14. Resin according to claim 13, **characterized in that** the peroxide is chosen from the group of organic peroxides.

15. Resin according to claim 14, **characterized in that** the peroxide is a liquid peroxide.

16. Resin according to claim 15, **characterized in that** the peroxide is selected from the group of perethers and perketones, and preferably is methylethylketone peroxide.

17. Resin according to any of claims 1-16, **characterized in that** the resin also contains an inhibitor, preferably chosen from the group of phenolic inhibitors, tempol, t-butylcatechol or phenothiazine.

18. Resin according to any of claims 1-17, **characterized in that** in the resin, in addition to the titanium compound also another metallic compound, not being a metal oxide, is present as an organometal compound, in particular a metallic compound selected from the group of copper, nickel, iron, vanadium or manganese compounds.

19. Resin according to any of claims 1-18, **characterized in that** the primary resin system comprises at least 5 wt.% of a reactive solvent.

20. Objects or structural parts as are being obtained when curing the unsaturated polyester or vinyl ester resin compositions according to any of claims 1 to 19.


**Patentansprüche**

1. Zusammensetzung aus ungesättigtem Polyesterharz oder Vinylesterharz mit reduzierter Drifttendenz der Gelierzeit, **dadurch gekennzeichnet, dass** das ungesättigte Polyesterharz oder vinylesterharz enthält:

   a. eine Titanverbindung, die nicht Titanoxid ist, in einer Menge von mindestens 0,05 mmol pro kg primäres Harzsystem;
   b. einen Liganden, der mit dem Titan der Titanverbindung koordinieren kann, in einer Menge des Liganden von mindestens 0,25 mmol pro kg primäres Harzsystem,

   wobei der Ligand und das Titan in einem Molverhältnis von 5 oder mehr verwendet werden.

2. Harzzusammensetzung nach Anspruch 1, **dadurch gekennzeichnet, dass** das Molverhältnis von Ligand zu Titan im Bereich von 10 bis 500, vorzugsweise im Bereich von 20 bis 200, liegt.

3. Ungesättigtes Polyesterharz oder Vinylesterharz nach Anspruch 1 oder 2, **dadurch gekennzeichnet, dass** die Titanverbindung in einer Menge von 0,15-100, vorzugsweise von 1-50 und am meisten bevorzugt von 10-40 mmol pro kg primäres Harzsystem vorhanden ist.

4. Harz nach einem der Ansprüche 1 bis 3, **dadurch gekennzeichnet, dass** die vorliegende Titanverbindung eine organische Titanverbindung oder eine Mischung davon ist.

5. Harz nach Anspruch 4, **dadurch gekennzeichnet, dass** die Titanverbindung ein Titanalkoxid, vorzugsweise ein Titanpropoxid oder -butoxid, oder ein Titancarboxylat ist.

6. Harz nach einem der Ansprüche 1-5, **dadurch gekennzeichnet, dass** der Ligand in einer Menge von 0,3-500 mmol pro kg primäres Harzsystem, mehr bevorzugt von 1-200 mmol und am meisten bevorzugt von 3-150 mmol pro kg primäres Harzsystem vorhanden ist.

7. Harz nach Anspruch 6, **dadurch gekennzeichnet, dass** der Ligand ein zweizähniger Ligand ist.

8. Harz nach Anspruch 7, **dadurch gekennzeichnet, dass** mindestens eine der Koordinationsgruppen des Liganden eine Sauerstoff enthaltende Gruppe ist.

9. Harz nach Anspruch 8, **dadurch gekennzeichnet, dass** beide Koordinationsgruppen des Liganden Sauerstoff enthaltende Gruppen sind.

**10.** Harz nach einem der Ansprüche 1-9, **dadurch gekennzeichnet, dass** der Ligand ausgewählt ist aus der Gruppe, bestehend aus Acetylaceton, Acetoacetaten, Acetoacetamiden, Ascorbinsäure, Pyruvinsäure, Weinsäurederivaten und Dialkylmalonaten.

**11.** Harz nach einem der Ansprüche 1-10, **dadurch gekennzeichnet, dass** das Harz im Wesentlichen frei von Kobalt ist.

**12.** Harz nach einem der Ansprüche 1-11, **dadurch gekennzeichnet, dass** das Harz ein DCPD-Harz, ein Isophtalharz, ein Orthophtalharz oder ein Vinylesterharz ist.

**13.** Harz nach einem der Ansprüche 1-12, **dadurch gekennzeichnet, dass** das Harz mit einem Peroxid gehärtet werden kann.

**14.** Harz nach Anspruch 13, **dadurch gekennzeichnet, dass** das Peroxid ausgewählt ist aus der Gruppe der organischen Peroxide.

**15.** Harz nach Anspruch 14, **dadurch gekennzeichnet, dass** das Peroxid ein flüssiges Peroxid ist.

**16.** Harz nach Anspruch 15, **dadurch gekennzeichnet, dass** das Peroxid ausgewählt ist aus der Gruppe, bestehend aus Perethern und Perketonen und vorzugsweise Methylethylketonperoxid ist.

**17.** Harz nach einem der Ansprüche 1-16, **dadurch gekennzeichnet, dass** das Harz auch einen Inhibitor enthält, vorzugsweise ausgewählt aus der Gruppe der phenolischen Inhibitoren, Tempol, t-Butylcatechol oder Phenothiazin.

**18.** Harz nach einem der Ansprüche 1-17, **dadurch gekennzeichnet, dass** im Harz neben der Titanverbindung auch eine weitere metallische Verbindung, die kein Metalloxid ist, als organometallische Verbindung vorliegt, insbesondere eine metallische Verbindung, ausgewählt aus der Gruppe, bestehend aus Kupfer-, Nickel-, Eisen-, Vanadium- oder Manganverbindungen.

**19.** Harz nach einem der Ansprüche 1-18, **dadurch gekennzeichnet, dass** das primäre Harzsystem mindestens 5 Gew.-% eines reaktiven Lösungsmittels umfasst.

**20.** Gegenstände oder Konstruktionsteile, die durch Härten der Zusammensetzungen aus ungesättigtem Polyester- oder Vinylesterharz nach einem der Ansprüche 1 bis 19 erhalten werden.

**Revendications**

**1.** Composition de résine polyester insaturé ou de résine vinylester présentant une tendance réduite à la dérive du temps de gel, **caractérisée en ce que** la résine polyester insaturé ou la résine vinylester contient :

> a. un composé du titane, autre que le dioxyde de titane, en une quantité d'au moins 0,05 mmol par kg de système de résine primaire :
> b. un ligand capable de former une liaison de coordination avec le titane du composé du titane, en une quantité du ligand d'au moins 0,25 mmol par kg de système de résine primaire,

> le ligand et le titane étant employés dans un rapport molaire d'au moins 5.

**2.** Composition de résine selon la revendication 1, **caractérisée en ce que** le rapport molaire entre le ligand et le titane est sur la gamme de 10 à 500, de préférence sur la gamme de 20 à 200.

**3.** Résine polyester insaturé ou résine vinylester selon la revendication 1 ou 2, **caractérisée en ce que** le composé du titane est présent en une quantité de 0,15-100, de préférence de 1-50, et tout particulièrement de 10-40 mmol par kg de système de résine primaire.

**4.** Résine selon l'une quelconque des revendications 1 à 3, **caractérisée en ce que** le composé du titane présent est un composé organotitane, ou un mélange de tels composés.

**5.** Résine selon la revendication 4, **caractérisée en ce que** le composé du titane est un alcoolate de titane, de préférence un propylate ou butylate de titane, ou un carboxylate de titane.

6. Résine selon l'une quelconque des revendications 1-5, **caractérisée en ce que** le ligand est présent en une quantité de 0,3-500 mmol par kg de système de résine primaire, mieux encore de 1-200 mmol, et tout particulièrement de 3-150 mmol par kg de résine primaire.

7. Résine selon la revendication 6, **caractérisée en ce que** le ligand est un ligand bidenté.

8. Résine selon la revendication 7, **caractérisée en ce qu'**au moins un des groupes de coordination du ligand est un groupe contenant un oxygène.

9. Résine selon la revendication 8, **caractérisée en ce que** les deux groupes de coordination du ligand sont des groupes contenant un oxygène.

10. Résine selon l'une quelconque des revendications 1-9, **caractérisée en ce que** le ligand est choisi dans le groupe constitué par l'acétylacétone, les acéto-acétates, les acétoacétamides, l'acide ascorbique, l'acide pyruvique, les dérivés de l'acide tartrique, et les malonates de dialkyle.

11. Résine selon l'une quelconque des revendications 1-10, **caractérisée en ce que** la résine ne contient pratiquement pas de cobalt.

12. Résine selon l'une quelconque des revendications 1-11, **caractérisée en ce que** la résine est une résine DCPD, une résine iso-phtalique, une résine orthophtalique ou une résine vinylester.

13. Résine selon l'une quelconque des revendications 1-12, **caractérisée en ce que** la résine peut être durcie avec un peroxyde.

14. Résine selon la revendication 13, **caractérisée en ce que** le peroxyde est choisi dans le groupe constitué par les peroxydes organiques.

15. Résine selon la revendication 14, **caractérisée en ce que** le peroxyde est un peroxyde liquide.

16. Résine selon la revendication 15, **caractérisée en ce que** le peroxyde est choisi dans le groupe constitué par les peréthers et les percétones, et est de préférence le peroxyde de méthyléthylcétone.

17. Résine selon l'une quelconque des revendications 1-16, **caractérisée en ce que** la résine contient aussi un inhibiteur, de préférence choisi dans le groupe constitué par les inhibiteurs phénoliques, le tempol, le t-butylcatéchol ou la phénothiazine.

18. Résine selon l'une quelconque des revendications 1-17, **caractérisée en ce que**, dans la résine, est présent également, en plus du composé du titane, un autre composé métallique, qui n'est pas un oxyde métallique, sous forme de composé organométallique, en particulier un composé métallique choisi dans le groupe constitué par les composés du cuivre, du nickel, du fer, du vanadium ou du manganèse.

19. Résine selon l'une quelconque des revendications 1-18, **caractérisée en ce que** le système de résine primaire comprend au moins 5% en poids d'un solvant réactif.

20. Objets ou éléments de structure obtenus quand on durcit les compositions de résine polyester insaturé ou vinylester selon l'une quelconque des revendications 1 à 19.